# EUROPÄISCHE PATENTSCHRIFT

(11) **EP 1 979 078 B1**
(45) Veröffentlichungstag und Bekanntmachung des Hinweises auf die Patenterteilung: **16.04.2014**
(21) Anmeldenummer: 07702375.2
(22) Anmeldetag: 19.01.2007
(51) Int. Cl.: B01D 71/02, B01D 67/00, C01B 3/50, C25B 13/04, H01M 8/10

(54) **HERSTELLUNGSVERFAHREN EINES PROTONEN LEITENDEN SCHICHTSYSTEMS**
PRODUCTION METHOD OF A PROTON CONDUCTING LAYER SYSTEM
PROCÉDÉ DE PRODUCTION D'UN SYSTÈME DE COUCHES CONDUCTRICES DE PROTONS

(30) Priorität: 02.02.2006 DE 102006005194
(43) Veröffentlichungstag der Anmeldung: 15.10.2008
(73) Patentinhaber: Forschungszentrum Jülich GmbH, 52425 Jülich (DE)
(72) Erfinder: SERRA-ALFARO, José, Manuel, E-46021 Valencia (ES); MEULENBERG, Wilhelm, Albert, NL-6294 AA Vijlen (NL); SCHOBER, Tilmann, 52379 Langerwehe (DE); BUCHKREMER, Hans-Peter, 52525 Heinsberg (DE); STÖVER, Detlev, 52382 Niederzier (DE)
(86) Internationale Anmeldenummer: PCT/DE2007/000094
(87) Internationale Veröffentlichungsnummer: WO 2007/087780

(56) Entgegenhaltungen:
- EP-A- 1 170 812
- WO-A-2005/093130
- DE-B3-102005 003 612
- JP-A- 2006 054 170
- US-A1- 2004 129 135
- SCHOBER ET AL: "Transformation of an oxygen ion conductor to a proton conductor by solid state reaction" SOLID STATE IONICS, NORTH HOLLAND PUB. COMPANY. AMSTERDAM, NL, Bd. 176, Nr. 29-30, September 2005 (2005-09), Seiten 2275-2277, XP005053854 ISSN: 0167-2738
- CHEN F ET AL: "CHEMICAL STABILITY STUDY OF BACE0.9 ND0.1 O3-ALPHA HIGH-TEMPERATURE PROTON-CONDUCTING CERAMIC" JOURNAL OF MATERIALS CHEMISTRY, THE ROYAL SOCIETY OF CHEMISTRY, CAMBRIDGE, GB, Bd. 7, Nr. 3, 1. März 1997 (1997-03-01), Seiten 481-485, XP000693118 ISSN: 0959-9428
- S.V. BHIDE, A.V. VIRKAR: "Stability of BaCeO3-Based proton conductors in water-containing atmospheres" JOURNAL OF ELECTROCHEMICAL SOCIETY, Bd. 146, Nr. 6, 1999, Seiten 2038-2044, XP002434361
- HIRABAYASHI D ET AL: "Improvement of a reduction-resistant Ce0.8Sm0.2O1.9 electrolyte by optimizing a thin BaCe1-xSmxO3-alpha layer for intermediate-temperature SOFCs" SOLID STATE IONICS, NORTH HOLLAND PUB. COMPANY. AMSTERDAM, NL, Bd. 176, Nr. 9-10, 15. März 2005 (2005-03-15), Seiten 881-887, XP004749245 ISSN: 0167-2738

## Beschreibung

Die Erfindung betrifft, ein Verfahren zur Herstellung eines Protonen leitenden Schichtsystems, welches beispielsweise zur Gastrennung eingesetzt werden kann.

### Stand der Technik

Zur Abscheidung von Wasserstoff aus Gasgemischen, bei der Produktion hochreinen Wasserstoffs, bei der Abgasnachbehandlung fossiler Kraftwerke sowie in Brennstoffzellen werden keramische Protonenleiter eingesetzt. Diese Protonenleiter sind im Idealfall für alle Arten von Gas undurchlässig mit Ausnahme von Wasserstoff, der in Form von Protonen passieren kann, sowie Wasser. Damit Wasserstoff auf diese Weise trans-portiert wird, wird in der Regel eine Potentialdifferenz über den Protonenleiter als treibende Kraft benötigt. Zumindest müssen aber Elektronen zur Verfügung gestellt werden, mit denen die Protonen nach dem Passieren des Protonenleiters zu Wasserstoff rekombinieren können. Nachteilig ist, dass viele gute Protonenleiter nicht beständig gegen bestimmte Gase, wie etwa das speziell in fossilen precombustion-Kraftwerken im Synthesegas vorliegende CO und CO₂ sind.

(T. Schober, Solid State Ionics 176 (2005), 2275) sowie die deutsche Patentanmeldung 10 2005 003 612 offenbaren Protonenleiter, die durch eine Festkörperreaktion eines Sauerstoffionenleiters mit einem Erdalkalimetallkarbonat hergestellt werden. Nachteilig weisen aber gerade besonders gute Protonenleiter häufig eine schlechte Stabilität gegenüber CO oder CO₂ auf, so dass für eine konkrete Anwendung ein Kompromiss zwischen Stabilität und Protonenleitfähigkeit gewählt werden muss. Dies verschärft den bei der Gastrennung ohnehin vorhandenen Zielkonflikt zwischen einem hohen Protonendurchsatz, der einen insgesamt dünnen Protonenleiter erfordert, und einer guten Gasdichtigkeit, die sich regelmäßig erst ab einer bestimmten Gesamtdicke des Protonenleiters einstellt.

### Aufgabe und Lösung

Aufgabe der Erfindung ist, ein Verfahren zur Herstellung eines Protonenleiters zur Verfügung zu stellen, der gegen Prozessgase wie CO₂ oder CO beständig ist und zugleich eine gute Protonenleitfähigkeit aufweist.

Diese Aufgabe wird erfindungsgemäß gelöst, durch ein Herstellungsverfahren gemäß Anspruch 1. Weitere vorteilhafte Ausgestaltungen ergeben sich jeweils aus den darauf rückbezogenen Unteransprüchen.

### Gegenstand der Erfindung

Es wird eine selektiv für Wasserstoff durchlässige Anordnung beschrieben, die beispielsweise zur Separation von Wasserstoff aus einem Gasgemisch eingesetzt werden kann. Das Gasgemisch kann feucht sein, also Wasserdampf enthalten. Dies ist bei in technischen Prozessen vorkommenden Gasgemischen in der Regel der Fall. Die Anordnung umfasst ein elektronisch leitfähiges, poröses Substrat und ein darauf angeordnetes gasdichtes, Protonen leitendes Schichtsystem. Das Schichtsystem umfasst wenigstens eine Schutzschicht und eine dazu benachbart angeordnete Funktionsschicht, wobei die Schutzschicht und die Funktionsschicht unterschiedliche chemische Zusammensetzungen aufweisen.

Eine solche Anordnung kann vorteilhaft eine gute Beständigkeit gegen Gase wie CO oder CO₂ mit einer hohen Protonenleitfähigkeit vereinen. Für einen konkreten Anwendungsfall ist in der Regel vorgegeben, welche Leckrate die Anordnung für welche Gase maximal aufweisen darf. Die Aufgabe ist, eine Anordnung mit höchstens dieser vorgegebenen Leckrate herzustellen, die gleichzeitig eine möglichst große Protonenleitfähigkeit aufweist. Zu diesem Zweck enthält die erfindungsgemäße Anordnung die Funktionsschicht, die aus einem Material mit sehr hoher Protonenleitfähigkeit besteht und gerade dick genug ist, dass ihre Leckrate unter dem vorgegebenen Wert bleibt.

Unter einer "hohen Protonenleitfähigkeit" im Sinne dieser Erfindung wird insbesondere eine Protonenleitfähigkeit von 10⁻²-10⁻¹ Siemens*cm⁻¹ bei 600°C verstanden, die mit einer niedrigeren elektronischen Leitfähigkeit einhergeht.

Die für eine vorgegebene Leckrate erforderliche Dicke der Funktionsschicht kann vom Fachmann anwendungsspezifisch ermittelt beziehungsweise minimiert werden. Für Funktionsschichten geeignete Materialien sind beispielsweise Ba-Ce_{0.8}Gd_{0.2}O_{3-δ}, SrCe_{0.95}Yb_{0.05}0_{3-δ} oder La_{0.9}Ba_{0.1}ErO_{3-δ}. Hierin ist 8 größer als 0, jedoch kleiner als 0,3. Es bezeichnet die Sauerstoffdefekte, die notwendig sind, damit das Material Protonen leitet.

Eine Anordnung, die nur aus der Funktionsschicht besteht, ist für viele Anwendungen technisch nicht brauchbar, da eine Funktionsschicht mit sehr guter Protonenleitfähigkeit in der Regel empfindlich gegen Prozessgase, wie beispielsweise CO oder CO₂, ist. Dass eine sehr gute Protonenleitfähigkeit und eine sehr gute Beständigkeit gegen diese Gase sich gegenseitig ausschließen, ist für viele Materialklassen aus (Kreuer, Annual Review of Materials Research (2003), 333) bekannt. Die sehr gut Protonen leitende, aber häufig empfindliche Funktionsschicht ist nun durch eine dünne Schutzschicht aus einem gegenüber den Gasen CO beziehungsweise CO₂ unempfindlichen Material geschützt, wobei in Kauf genommen wird, dass dieses Material selbst in der Regel eine etwas schlechtere Protonenleitfähigkeit aufweist als das Material der Funktionsschicht. Im Interesse einer guten Protonenleitfähigkeit des gesamten Schichtsystems, das als eine Reihenschaltung zweier Widerstände angesehen werden kann, sollte die Schutzschicht gerade nur so dick sein, wie dies für den Schutz der Funktionsschicht erforderlich ist. Dann legen die Protonen den größten Teil ihres Weges durch das Schichtsystem in der sehr gut Protonen leitenden Funktionsschicht zurück.

Für Schutzschichten geeignete Materialien sind beispielsweise BaZr_{0.85}Y_{0.15}O_{3-δ}, SrTi_{0.95}Sc_{0.05}O_{3-δ} oder CaZr_{0.9}In_{0.1}O_{3-δ}, worin δ wiederum für die Sauerstoffdefekte steht. Allgemein zeichnen sich für Schutzschichten geeignete Materialien dadurch aus, dass ihre thermodynamische freie Energie durch Reaktion mit CO₂ oder CO nicht weiter abgesenkt werden kann. Bei ausreichender Kenntnis der thermodynamischen Eigenschaften aller Ausgangsmaterialien lässt sich möglicherweise vorhersagen, ob eine bestimmte Zusammensetzung aus diesen Ausgangsmaterialien gegen CO₂ und CO unempfindlich ist.

Eine Anordnung, die nur aus der Schutzschicht besteht, ist technisch nicht sinnvoll. Eine Schutzschicht mit einer ausreichenden Protonenleitfähigkeit wäre so dünn, dass ihre Leckrate weit über dem zulässigen Wert läge. Eine hinreichend gasdichte Schutzschicht wäre so dick, dass ihre Protonenleitfähigkeit nicht ausreichend wäre. Die Schutzschicht kann einzelne Undichtigkeiten gegen kleine Gasmoleküle enthalten, ohne dass die Schutzfunktion maßgeblich beeinträchtigt wird.

Die Kombination von Schutzschicht und Funktionsschicht hingegen weist bei einer vorgegebenen Leckrate eine höhere Protonenleitfähigkeit auf als Einzelschichten aus Materialien nach dem Stand der Technik mit der gleichen Leckrate. Zugleich weist die Kombination eine höhere Lebensdauer auf als Einzelschichten nach dem Stand der Technik, bei denen immer ein Kompromiss zwischen Beständigkeit und Protonenleitfähigkeit eingegangen werden muss. Diese Einzelschichten könnten von den Prozessgasen und aggressiven Spurengasen, wie beispielsweise SO₂, nach und nach zerstört werden. Das erfindungsgemäße Schichtsystem weist typischerweise eine Helium-Leckrate von 10⁻⁵ mbar*1*s⁻¹*cm⁻² auf.

Vorteilhaft ist die Schutzschicht zwischen Substrat und Funktionsschicht angeordnet. Dann lässt sich die Anordnung in einer Brennstoffzelle einsetzen, bei der das poröse Substrat die Anode bildet. In einer solchen Brennstoffzelle liegt auf der Anodenseite CO₂ vor, das von der Schutzschicht zurückgehalten wird. Die von der Brennstoffzelle erzeugte elektrische Energie kann die treibende Kraft für den Protonentransport genutzt werden. Die Anordnung ist in der gleichen räumlichen Konfiguration aber auch darin funktionsfähig, wenn die Brennstoffzelle als Elektrolyseur verwendet wird. Die treibende Kraft für den Protonentransport wirkt dann in der umgekehrten Richtung.

Alternativ kann die Funktionsschicht auch zwischen Substrat und Schutzschicht angeordnet sein. Ebenso ist es möglich, die Funktionsschicht zwischen zwei Schutzschichten anzuordnen.

In einer besonders vorteilhaften Ausgestaltung weisen die Schutz- und/oder die Funktionsschicht die Zusammensetzung MeMO₃ auf, worin Me ein Erdalkalimetall und M Zirkonium, Titan oder ein Seltenerdmetall ist. Materialien mit dieser Zusammensetzung kristallisieren in einer Perowskitstruktur, die insbesondere im Fall kubischer oder leicht verzerrter kubischer Struktur eine besonders hohe Protonenleitfähigkeit bewirkt. Als Erdalkalimetalle sind auf Grund ihrer Ionenradien und ihrer 2⁺-Valenz insbesondere Barium, Strontium oder Kalzium geeignet. In der Regel sind zusätzliche Dotierstoffe erforderlich, um die Schicht in einem ausreichenden Maße Protonen leitend zu machen. Um die Protonenleitfähigkeit zu steigern, können die Schutz- und/oder die Funktionsschicht insbesondere mit Yttrium, Ytterbium, Indium, Gadolinium, Scandium, Zinn oder Niob dotiert sein, wobei der maximale Gehalt an Dotierstoffen pro Schicht 20 Molprozent (bezogen auf das Metall M) betragen sollte.

Vorteilhaft enthält die Schutzschicht Zirkonium. Dieses Metall reagiert bei Betriebstemperaturen bis zu 1200 °C chemisch nicht mit Keramik-Metall-Cermets, die insbesondere in Brennstoffzellen häufig als Substrate verwendet werden.

Vorteilhaft umfasst die Funktionsschicht Cer. Sollte dieses Metall nach der Herstellung der Schicht noch teilweise in elementarer Form vorliegen, reagiert es bei Betriebstemperaturen bis 1200 °C nicht mit den meistern perowskitischen Oxiden.

Vorteilhaft umfasst das Substrat ein Oxid MO₂, M₂O₃ oder MXO₃, worin M und X jeweils Zirkonium, Titan oder ein Seltenerdmetall ist sowie M und X unterschiedliche Metalle sind. Als Metall M und/oder X sind insbesondere Cer, Samarium, Erbium, Dysprosium, Gadolinium oder Neodym geeignet. Ein derartiges Substrat ist chemisch auch bei hohen Temperaturen inert und weist zudem einen zum Schichtsystem passenden thermischen Ausdehnungskoeffizienten auf. Dadurch wird vermieden, dass die Schicht bei hohen Betriebstemperaturen durch mechanische Spannungen reißt und somit ihre Gasdichtigkeit verliert.

Besonders vorteilhaft ist ein Substrat umfassend BaZrO₃ oder BaTiO₃, weil es sowohl chemisch als auch in seinem thermischen Ausdehnungskoeffizienten an Schutz- und/öder Funktionsschichten angepasst ist, die ein Perowskit auf der Basis eines Erdalkalimetalls umfassen. Hierbei muss BaZrO₃ in einer Mischung mit einem elektronisch leitfähigen Material, wie beispielsweise einem Metall, vorliegen, da ansonsten das Substrat als Ganzes nicht elektronisch leitfähig ist.

In einer besonders vorteilhaften Ausgestaltung ist das Substrat ein Material, welches als Anodenmaterial für eine Hochtemperaturbrennstoffzelle verwendbar ist, und hier insbesondere ein Cermet. Dieses Cermet umfasst Yttrium-stabilisiertes Zirkoniumoxid, Cer-Gadolinium-Oxid oder Bariumzirkonat als erste Komponente sowie zusätzlich metallisches Nickel als zweite Komponente. Das Nickel wird bei der Herstellung üblicherweise in Form von Nickeloxid eingebracht, woraus es bei der ersten Beaufschlagung des Substrats mit hoher Temperatur in einer reduzierenden Atmosphäre zu metallischem Nickel reduziert wird. In dieser Ausgestaltung erfüllt das Substrat in der erfindungsgemäßen Anordnung gleichzeitig die Funktion einer Anode in einer Brennstoffzelle.

Im Rahmen der Erfindung wurde ein Verfahren zur Herstellung eines gasdichten, Protonen leitenden Schichtsystems aus wenigstens einer Schutzschicht und einer Funktionsschicht auf einem elektronisch leitfähigen, porösen Substrat gefunden, wobei Schutzschicht und Funktionsschicht unterschiedliche chemische Zusammensetzungen aufweisen, jedoch jeweils gasdicht und Protonen leitend sind. Bei diesem Verfahren wird auf das Substrat zunächst eine erste Schicht umfassend ein Oxid eines Metalls M1 aufgebracht und gesintert, wobei M1 Zirkonium, Titan oder ein dotiertes Seltenerdmetall ist. Zirkonium und Titan als Metall M1 müssen in der Regel ebenfalls dotiert werden, im Falle des Zirkoniums etwa durch Dotierung mit Yttrium. Anschließend wird auf diese gesinterte Schicht eine zweite Schicht umfassend ein Oxid eines Metalls M2 aufgebracht, welches aus der gleichen Klasse gewählt wird wie das Metall M1, jedoch von M1 verschieden ist. Das Schichtsystem wird erneut gesintert. Auf die gesinterte zweite Schicht wiederum wird eine dritte Schicht umfassend ein Karbonat, Oxid oder Hydroxid eines oder mehrerer Erdalkalimetalle aufgebracht. Diese Erdalkalimetallverbindung wird in einer derartigen Menge aufgebracht, dass zumindest die zweite Schicht während einer abschließenden Sinterung vollständig in ein Perowskit mit der Formel Me(M2)O₃ umgesetzt und so Protonen leitend ausgestaltet wird.

Sofern die zweite Schicht als Funktionsschicht und die erste Schicht als wesentlich dünnere Schutzschicht eingesetzt wird, ist es nicht zwingend notwendig, auch die erste Schicht zwecks Steigerung der Protonenleitfähigkeit bei der abschließenden Sinterung vollständig chemisch umzusetzen. Häufig genügt in diesen Fällen eine nur teilweise Umsetzung, oder die bereits vorhandene Protonenleitfähigkeit der ersten Schicht reicht sogar ganz ohne Umsetzung für ihre Verwendung als dünne Schutzschicht aus.

Aus vorgenannten Gründen wird die Menge der als dritte Schicht aufgebrachten Erdalkalimetallverbindung daher stöchiometrisch so gewählt, dass sie bei der abschließenden Sinterung wenigstens die zweite Schicht vollständig in einen Perowskiten mit der Formel Me(M2)O₃ umzusetzen vermag, worin Me das Erdalkalimetall ist. Sofern nicht bereits ein Erdalkalioxid als dritte Schicht aufgebracht wurde, entsteht dieses während der abschließenden Sinterung aus dem Karbonat oder dem Hydroxid, wobei beispielsweise aus einem Karbonat CO₂ freigesetzt wird. Das auf diese Weise entstandene, beziehungsweise bereits als dritte Schicht vorliegende, Erdalkalioxid diffundiert und infiltriert in die zweite und schließlich auch in die erste Schicht, wo es Festkörperreaktionen mit den Materialien dieser Schichten eingeht. Durch Reaktion der in diesen Schichten vorliegenden Metalloxide mit dem Erdalkalioxid bilden sich Protonen leitende Perowskite Me(M1,M2)O₃ aus. Da es sich bei M1 und M2 um unterschiedliche Metalle handelt, bilden sich zwei verschiedene Perowskite mit qualitativ verschiedenen Eigenschaften aus. Beispielsweise kann aus der zweiten Schicht eine Funktionsschicht entstehen, die besonders gut Protonen leitet.

Aus der ersten Schicht kann eine Schutzschicht entstehen, die besonders unempfindlich gegen bestimmte Gase ist. Die erste Schicht muss dabei nicht vollständig chemisch umgesetzt werden. In vielen Fällen genügt es, durch eine nur teilweise Umsetzung der ersten Schicht die Protonenleitfähigkeit der Schutzschicht zu verbessern. Auch eine umgekehrte Anordnung, bei der die Schutzschicht über der Funktionsschicht liegt, oder eine Stapelfolge aus einer Schutzschicht, einer Funktionsschicht und einer weiteren Schutzschicht ist mit dem Verfahren herstellbar. In diesem Fall muss die Menge an aufgebrachter Erdalkalimetallverbindung so ausreichend gewählt werden, dass zumindest die entstehende Funktionsschicht vollständig in einen Protonenleiter umgewandelt wird.

Die abschließende Sinterung muss bei einer derartigen Temperatur und über eine derartige Dauer erfolgen, dass sich das Erdalkalioxid durch das ganze Schichtsystem ausbreiten kann. Welche Kombinationen von Temperaturen und Sinterzeiten möglich und sinnvoll sind, hängt von den im Einzelnen in den Schichten verwendeten Materialien sowie von den Schichtdicken ab. Dem Fachmann ist geläufig, für eine gegebene Problemstellung die Sinterparameter in einer zumutbaren Anzahl Versuche zu ermitteln. Erst recht ist ihm geläufig, für die Sinterung der ersten beiden, noch nicht miteinander wechselwirkenden Schichten geeignete Sinterparameter zu wählen.

Der Vorteil des erfindungsgemäßen Verfahrens liegt darin, dass die Materialien, aus denen am Ende die Schutzschicht und die Funktionsschicht entstehen, in einer leicht handhabbaren Form aufgebracht werden. Dadurch können diese Materialien mit für eine großflächige Beschichtung von Substraten geläufigen Techniken, wie Vakuumschlickerguss, Siebdruck oder Nasspulverspritzen, aufgebracht werden. Insbesondere können mehrere Schichten nacheinander mit denselben Apparaturen aufgebracht und gesintert werden, was den apparativen Aufwand für die Gesamtherstellung des Schichtsystems verringert. Die Herstellung der Funktionsschicht über die Festkörperreaktion vermeidet zudem die Probleme, die sich daraus ergeben, dass das Material der Funktionsschicht im fertigen, Protonen leitenden Zustand im Allgemeinen schlecht sinterbar ist.

In einer besonders vorteilhaften Ausgestaltung der Erfindung wird die Menge der als dritte Schicht aufgebrachten Erdalkalimetallverbindung stöchiometrisch oder im Überschuss gewählt, so dass sie auch die erste Schicht vollständig in einen Protonen leitenden Perowskiten umzusetzen vermag. Auf diese Weise kann auch eine erste Schicht, die von sich aus kein Protonenleiter ist, in einen Protonenleiter umgewandelt werden. Selbst Sauerstoffionenleiter lassen sich so in der ersten Schicht verwenden.

Vorteilhaft wird als Material für die erste Schicht Yttrium-stabilisiertes Zirkoniumoxid gewählt, sofern die erste Schicht als Schutzschicht verwendet wird. Im Folgenden soll davon ausgegangen werden, dass die erste Schicht als Schutzschicht verwendet wird. Yttrium-stabilisiertes Zirkoniumoxid hat einen ähnlichen thermischen Ausdehnungskoeffizienten wie gängige hochtemperaturbelastbare Substrate, insbesondere solche, die als Anodensubstrate in Brennstoffzellen eingesetzt werden. Beispielsweise sind dies Substrate, welche etwa je zur Hälfte aus Yttrium-stabilisiertem Zirkoniumoxid und metallischem Nickel bestehen. In gewissen Grenzen lässt sich durch die genaue Zusammensetzung der ersten Schicht deren Ausdehnungskoeffizient auch an den des Substrats anpassen. Durch die Wahl von Yttrium-stabilisiertem Zirkoniumoxid als Material für die erste Schicht werden somit thermische Spannungen zwischen dieser Schicht und dem Substrat vermieden. Dadurch ist auch bei hohen Betriebstemperaturen die Haftung der Schicht auf dem Substrat gewährleistet.

Die erste Schicht kann insbesondere bei einer Temperatur zwischen 13.00 °C und 1500 °C gesintert werden. Bei dieser Temperatur lässt sich bereits die erste Schicht je nach Material gasdicht ausgestalten, was für die Gasdichtigkeit des letztendlich entstehenden Schichtsystems vorteilhaft, aber nicht zwingend notwendig ist.

Die erste Schicht als Schutzschicht ist beständig gegen CO beziehungsweise CO₂. Sofern diese Schicht eine deutlich geringere Protonenleitfähigkeit aufweist als die Funktionsschicht, sollte sie möglichst dünn ausgeführt sein. Sie weist daher vorteilhaft nach ihrer Sinterung eine Dicke von 10 µm oder weniger, insbesondere eine Dicke von nur wenigen µm, auf.

Vorteilhaft wird für die zweite Schicht Cer als Metall M2 gewählt. Sollte dieses Metall nach der Herstellung der Schicht noch teilweise in elementarer Form vorliegen, reagiert es bei Betriebstemperaturen bis 1200 °C nicht mit den meistern perowskitischen Oxiden.

Vorteilhaft weist die zweite Schicht nach ihrer Sinterung eine Dicke zwischen 5 und 100 µm auf, da aus ihr später die gut Protonen leitende Funktionsschicht entsteht. Die Schichtdicke wird so gewählt, dass das gesamte Schichtsystem einerseits die für die jeweilige Anwendung geforderte Gasdichtigkeit (vorgegebener Wert für die Leckrate) aufweist, andererseits aber auch einen genügend großen Protonenfluss ermöglicht. Das Schichtsystem wird nach Aufbringen der zweiten Schicht für mindestens 2 Stunden bei einer Temperatur zwischen 1100 °C und 1400 °C gesintert.

Die Dicken der ersten und zweiten Schicht werden vorteilhaft so gewählt, dass bei der abschließenden Sinterung eine zwischen 5 und 100 µm dicke Funktionsschicht und/oder eine zwischen 0,5 und 10 µm dicke Schutzschicht entstehen. Das so entstehende Schichtsystem ist in seiner Gesamtheit gasdicht, beständig gegen Prozessgase wie insbesondere CO oder CO₂ und weist eine höhere Protonenleitfähigkeit auf als eine Einzelschicht nach dem Stand der Technik mit gleicher Gasdichtigkeit (Leckrate).

Zwecks einer weiteren Steigerung der Protonenleitfähigkeit können die erste und/oder die zweite Schicht vorteilhaft mit Yttrium, Ytterbium, Indium, Gadolinium, Scandium, Zinn oder Niob dotiert werden.

Als Erdalkalimetall Me sind auf Grund ihrer Ionenradien und ihrer 2⁺-Valenz insbesondere Barium, Strontium und Kalzium geeignet. Nach dem Aufbringen der dritten Schicht wird das Schichtsystem vorteilhaft für mindestens 6 Stunden bei einer temperatur zwischen 110-0 °C und 1500 °C gesintert, um eine Diffusion des Erdalkalioxids durch das ganze Schichtsystem zu gewährleisten und somit sowohl die erste als auch die zweite Schicht vollständig chemisch umzusetzen.

Es wird ein weiteres Verfahren zur Herstellung eines gasdichten, Protonen leitenden Schichtsystems aus wenigstens einer Schutzschicht und einer Funktionsschicht auf einem elektronisch leitfähigen, porösen Substrat beschrieben, wobei Schutzschicht und Funktionsschicht unterschiedliche chemische Zusammensetzungen aufweisen, jedoch jeweils gasdicht und Protonenleitend sind. Dieses Verfahren ist dadurch gekennzeichnet, dass die Schutzschicht und die Funktionsschicht mittels PVD und/oder CVD direkt aufgebracht werden. Diese Aufbringungsmethoden haben den Vorteil, dass sich die Schichten damit in einem Arbeitsgang herstellen lassen. Dies vereinfacht die Herstellung und reduziert die Produktionskosten. Zudem sind die Schichtdicken sehr genau kontrollierbar.

Als Materialien für die Schutz- und/oder Funktionsschicht sind insbesondere dotierte Bariumzirkonate geeignet. Als Material für die Funktionsschicht sind darüber hinaus auch dotierte Bariumcerate geeignet, die sich für die Schutzschicht nicht verwenden lassen, da sie gegen CO und CO₂. nicht beständig sind. Als Dotierstoffe lassen sich alle Materialien einsetzen, die auch bei dem oben beschriebenen erfindungsgemäßen Verfahren mit mehrfacher Sinterung gewählt werden können, insbesondere also Yttrium, Ytterbium, Indium, Gadolinium, Scandium, Zinn oder Niob. Stets lassen sich geeignete Precursor für die Aufbringung mittels CVD herstellen, und/oder es lässt sich ein festes Target für die Aufbringung mittels PVD herstellen.

Ein festes Target für PVD kann beispielsweise durch Verpressen des entsprechenden Pulvergemisches hergestellt werden. Dieses Target wird bei der Schichtaufbringung mittels Elektronenstrahl verdampft, und der Dampf scheidet sich auf dem Substrat ab. Auf diese Weise konnten auf einem konventionellen Brennstoffzellensubstrat aus Ni/ZrO₂ mit Anodenschicht erfolgreich Schutzschichten aus SrTi_{0.95}Sc_{0.05}O_{3-δ} und Funktionsschichten aus SrCe_{0.95}Yb_{0.05}0_{3-δ} hergestellt werden. Hierin ist δ größer als 0, jedoch kleiner als 0,3. Es bezeichnet die Sauerstoffdefekte, die notwendig sind, damit das Material Protonen leitet.

Die erfindungsgemäße Anordnung oder das erfindungsgemäß hergestellte Schichtsystem wird vorteilhaft als Elektrolyt in einer Brennstoffzelle eingesetzt. Dadurch kann die Brennstoffzelle bei niedrigeren Temperaturen betrieben werden als die übliche Festelektrolyt-Brennstoffzelle (SOFC), die nur deshalb bei hohen Temperaturen betrieben wird, weil ihr Sauerstoffionen leitender Elektrolyt dies erfordert. Das Schichtsystem kann aber auch in einem Elektrolyseur eingesetzt werden, wobei hier lediglich die Polung des als treibende Kraft über das Schichtsystem angelegten Potentials entgegengesetzt zur Polung beim Einsatz in einer Brennstoffzelle zu wählen ist.

Alternativ kann die Anordnung oder das Schichtsystem als Gasseparationsmembran eingesetzt werden, insbesondere zur Abscheidung von CO₂ aus dem Abgasstrom eines fossilen Kraftwerks oder zur Abscheidung von Wasserstoff aus einem Synthesegas. Bei einer derartigen Verwendung zeichnet sich der erhaltene Wasserstoff durch eine besonders hohe Reinheit aus, so dass er als Energieträger oder Chemierohstoff weiter verwendet werden kann. Die Gasseparation erfordert weder hohe Drücke noch Hilfseinrichtungen mit beweglichen Teilen. Zudem kann die Menge des anfallenden Wasserstoffs über die als treibende Kraft notwendige Potentialdifferenz elektrisch reguliert werden.

### Spezieller Beschreibungsteil

Nachfolgend wird der Gegenstand der Erfindung anhand von Figuren näher erläutert, ohne dass der Gegenstand der Erfindung dadurch beschränkt wird. Es ist gezeigt:
- Figur 1:: Querschnitt durch ein erfindungsgemäß hergestelltes Schichtsystem.
- Figur 2:: Ablauf einer Ausführungsform des erfindungsgemäßen Verfahrens.

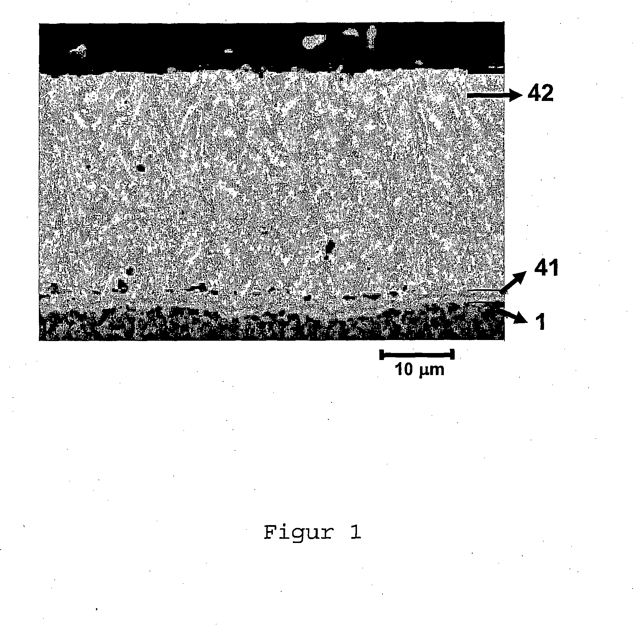

Figur 1 zeigt einen Querschnitt durch ein erfindungsgemäß hergestelltes Schichtsystem. Auf ein etwa 12 mm dickes Substrat 1 mit einer quadratischen Geometrie (10 mm x 10 mm) aus NiO/8YSZ (ZrO₂), welches bei 1250 °C vorgesintert wurde, wurde eine 8YSZ-Schicht mittels Vakuumschlickerguss aufgebracht und bei 1400 °C gesintert, um die bei der Hochtemperaturbrennstoffzelle erforderliche Gasdichtigkeit des Elektrolyten zu erreichen. Der d₅₀-Wert der Teilchengröße in der Suspension betrug 0,2 µm. Die Dicke dieser ersten Schicht betrug nach ihrer Sinterung 5 µm. Bei einer hier nicht gezeigten weiteren Probe wurde ein poröses Substrat aus CGO (Ce_{0.8}Gd_{0.2}O₂) verwendet.

Es wurde eine CGO-Schicht der Zusammensetzung Ce_{0.8}Gd_{0.2}O₂ mittels Siebdruck aufgetragen und zunächst bei 60 °C für 6 Stunden getrocknet. Die für den Siebdruck verwendete Paste hatte einen Feststoffanteil von etwa 55 Gewichtsprozent. Anschließend wurde die Schicht bei 1200°C-1300°C für mehrere Stunden gesintert. Nach der Sinterung hatte diese Schicht eine Dicke von 20 µm. Sie war zu diesem Zeitpunkt noch porös.

Zum Schluss wurde im stöchiometrischen Verhältnis zu den beiden bereits vorliegenden Schichten BaCO₃ mittels Siebdruck aufgetragen, wobei die für den Siebdruck verwendete Paste hatte einen Feststoffanteil von etwa 55 Gewichtsprozent hatte. Die Schicht wurde abschließend für 8 Stunden bei 1300 °C gesintert. Dabei wurde CO₂ freigesetzt, und es entstand BaO. An der Grenzfläche zum Substrat entstand eine gasdichte Bariumzirkonatschicht 41 und darüber eine gasdichte Bariumceratschicht 42. An weiteren Proben wurde festgestellt, dass das Aufbringen einer zu großen Menge BaCO₃ nach der Sinterung Oberflächendefekte und BaO-reiche poröse Strukturen erzeugt.

Um Elektronen für die Rekombination der Protonen zu Wasserstoff zur Verfügung zu stellen, muss die Schicht nun noch mit einer dünnen leitfähigen Schicht aus beispielsweise Platin bedruckt werden. Auch muss das NiO im Substrat bei 800 °C zu metallischem Nickel reduziert werden, damit das Substrat elektronisch leitfähig wird. Mit diesem Schichtsystem kann dann ein auf der Substratseite anliegendes Gasgemisch aus CO₂ und H₂ getrennt werden.

Das Schichtsystem lässt sich aber auch in einer Brennstoffzelle als Protonen leitender Elektrolyt verwenden, wobei es allerdings erforderlich ist, eine Potentialdifferenz von außen anzulegen. Eine solche Brennstoffzelle arbeitet vorteilhaft bei geringeren Temperaturen als die bekannte Hochtemperaturbrennstoffzelle mit einem Elektrolyten aus ZrO₂.

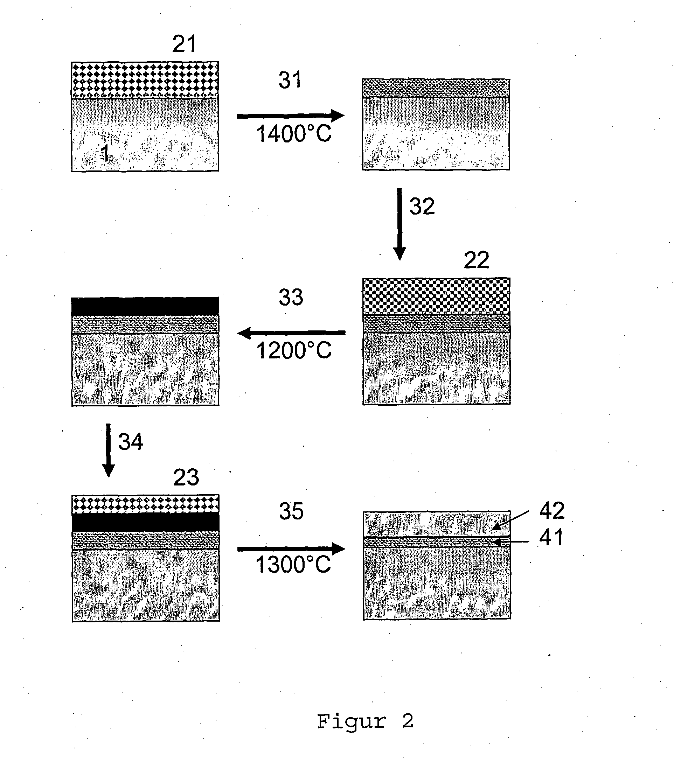

Figur 2 skizziert den Herstellungsprozess der in Figur 1 gezeigten Probe. Auf das Substrat 1 wurde mittels Vakuumschlickerguss die erste Schicht 21 aus 8YSZ aufgebracht. Diese wurde in einem anschließenden Sinterschritt 31 bei einer Temperatur von 1400 °C gesintert. Danach wurde in einem Beschichtungsschritt 32 durch Siebdruck die CGO-Schicht 22 der Zusammensetzung Ce_{0.8}Gd_{0.2}O₂ aufgebracht und in einem weiteren Sinterschritt 33 bei einer Temperatur von 1200 °C gesintert. In einem Beschichtungsschritt 34 wurde durch Siebdruck eine Schicht 23 aus BaCO₃ aufgetragen. Das Gesamtsystem wurde in einem abschließenden Sinterschritt 35 bei einer Temperatur von 1300 °C gesintert. Daraufhin entstanden die gasdichte Bariumzirkonatschicht 41 (BaZr_{0.85}Y_{0.15}O_{3-δ}) und darüber die Bariumceratschicht 42 (BaCe_{0.8}Gd_{0.2}0_{3-δ}).

Es wurde eine weitere Probe unter ausschließlicher Verwendung von Siebdruck als Schichtaufbringungsmethode hergestellt. Die verwendete Paste bestand jeweils zu 50 Gewichtsprozent aus dem eigentlichen Schichtmaterial, zu 47 Gewichtsprozent aus Terpineol und zu 3 Gewichtsprozent aus Ethylcellulose. Es wurde eine im nassen Zustand 30 µm dicke Schicht aus mit 20 Molprozent Scandium dotiertem Zirkoniumoxid mit einem d₅₀-Wert der Teilchengröße in der Paste von 0,2 µm aufgebracht und für 5 Stunden bei 1400 °C dichtgesintert. Anschließend wurde eine im nassen Zustand 60 µm dicke CGO-Schicht mit einem d₅₀-Wert der Teilchengröße in der Paste von 0,2 µm aufgebracht und für 5 Stunden bei 1050 °C dichtgesintert. Zum Schluss wurde eine im nassen Zustand 190 µm dicke BaCO₃-Schicht mit einem d₅₀-Wert der Teilchengröße in der Paste von 0,4 µm aufgebracht und für 8 Stunden bei 1300 °C dichtgesintert.

## Patentansprüche

1. Verfahren zur Herstellung eines gasdichten, Protonen leitenden Schichtsystems aus wenigstens einer Schutzschicht und einer Funktionsschicht auf einem elektronisch leitfähigen, porösen Substrat, wobei Schutzschicht und Funktionsschicht unterschiedliche chemische Zusammensetzungen aufweisen, jedoch jeweils gasdicht und Protonen leitend sind, mit den Schritten:
- auf das Substrat wird eine erste Schicht umfassend ein Oxid eines Metalls M1 aufgebracht und gesintert, wobei M1 Zirkonium, Titan oder ein dotiertes Seltenerdmetall ist;
- auf diese gesinterte Schicht wird eine zweite Schicht umfassend ein Oxid eines Metalls M2 aufgebracht, welches aus der gleichen Klasse gewählt wird wie das Metall M1, jedoch von M1 verschieden ist, und das Schichtsystem wird anschließend gesintert;
- auf die gesinterten Oxidschichten wird eine dritte Schicht umfassend ein Karbonat, Oxid oder Hydroxid eines oder mehrerer Erdalkalimetalle Me in einer derartigen Menge aufgebracht, dass
a) die zweite Schicht während einer abschließenden Sinterung vollständig in einen Perowskiten mit der Formel Me(M2)O₃ und
b) die erste Schicht zumindest teilweise in einen Perowskiten mit der Formel Me(M1)O₃ umgesetzt und so Protonen leitend ausgestaltet wird.

2. Verfahren nach Anspruch 1, **dadurch gekennzeichnet, dass** die Schichten mittels Vakuumschlickerguss, Siebdruck oder Nasspulverspritzen aufgebracht werden.

3. Verfahren nach einem der Ansprüche 1 bis 2, **dadurch gekennzeichnet, dass** die Menge der als dritte Schicht aufgebrachten Erdalkalimetallverbindung stöchiometrisch oder im Überschuss gewählt wird, so dass auch die erste Schicht vollständig in einen Protonen leitenden Perowskit umgesetzt wird.

4. Verfahren nach einem der Ansprüche 1 bis 3, **dadurch gekennzeichnet, dass** für die erste Schicht Yttrium-stabilisiertes Zirkoniumoxid gewählt wird.

5. Verfahren nach einem der Ansprüche 1 bis 4, **dadurch gekennzeichnet, dass** die erste Schicht bei einer Temperatur zwischen 1300 °C und 1500 °C gesintert wird.

6. Verfahren nach einem der Ansprüche 1 bis 5, **dadurch gekennzeichnet, dass** für die zweite Schicht Cer als Metall M2 gewählt wird.

7. Verfahren nach einem der Ansprüche 1 bis 6, **dadurch gekennzeichnet, dass** das Schichtsystem nach Aufbringen der zweiten Schicht für mindestens 2 Stunden bei einer Temperatur zwischen 1100 °C und 1400 °C gesintert wird.

8. Verfahren nach einem der Ansprüche 1 bis 7, **dadurch gekennzeichnet, dass** für die erste und zweite Schicht Schichtdicken so gewählt werden, dass bei der abschließenden Sinterung eine zwischen 5 und 100 µm dicke Funktionsschicht und/oder eine zwischen 0,5 und 10 µm dicke Schutzschicht entstehen.

9. Verfahren nach einem der Ansprüche 1 bis 8, **dadurch gekennzeichnet, dass** die erste und/oder die zweite Schicht mit Yttrium, Ytterbium, Indium, Gadolinium, Scandium, Zinn oder Niob dotiert werden.

10. Verfahren nach einem der Ansprüche 1 bis 9, **dadurch gekennzeichnet, dass** Barium, Strontium oder Kalzium als Erdalkalimetall Me gewählt wird.

11. Verfahren nach einem der Ansprüche 1 bis 10, **dadurch gekennzeichnet, dass** das Schichtsystem nach Aufbringen der dritten Schicht für mindestens 6 Stunden bei einer Temperatur zwischen 1100 °C und 1500 °C gesintert wird.

## Claims

1. Method of producing a gas-tight, proton-conducting layer system consisting of at least one protective layer and a functional layer on an electronically conductive porous substrate, wherein the protective layer and the functional layer have different chemical compositions, but are each gas-tight and proton-conducting, comprising the steps:
- a first layer comprising an oxide of a metal M1 is applied to the substrate and sintered, M1 being zirconium, titanium or a doped rare earth metal;
- a second layer comprising an oxide of a metal M2 selected from the same class as the metal M1, but different from M1, is applied to this sintered layer and the layer system is then sintered,
- a third layer comprising a carbonate, oxide or hydroxide of one or more alkaline earth metals Me is applied to the sintered oxide layers in such a quantity that
a) the second layer is converted completely into a perovskite having the formula Me(M2)O₃ during a final sintering operation and
b) the first layer is converted at least partially into a perovskite having the formula Me(M1)O₃ and is thus proton-conducting.

2. Method according to claim 1, **characterised in that** the layers are applied by means of vacuum slip casting, screen printing or wet powder spraying.

3. Method according to one of claims 1 to 2, **characterised in that** the quantity of the alkaline earth metal compound applied as the third layer is selected stoichiometrically or in excess so that the first layer is also converted completely into a proton-conducting perovskite.

4. Method according to one of claims 1 to 3, **characterised in that** yttrium-stabilised zirconium oxide is selected for the first layer.

5. Method according to one of claims 1 to 4, **characterised in that** the first layer is sintered at a temperature of between 1300°C and 1500°C.

6. Method according to one of claims 1 to 5, **characterised in that** cerium is selected as the metal M2 for the second layer.

7. Method according to one of claims 1 to 6, **characterised in that**, after the application of the second layer, the layer system is sintered for at least 2 hours at a temperature of between 1100°C and 1400°C.

8. Method according to one of claims 1 to 7, **characterised in that** the thicknesses of the first and second layers are selected so as to result in a functional layer having a thickness of between 5 and 100 µm and/or a protective layer having a thickness of between 0.5 an 10 µm upon the final sintering operation.

9. Method according to one of claims 1 to 8, **characterised in that** the first and/or the second layer(s) is/are doped with yttrium, ytterbium, indium, gadolinium, scandium, tin or niobium.

10. Method according to one of claims 1 to 9, **characterised in that** barium, strontium or calcium is selected as the alkaline earth metal Me.

11. Method according to one of claims 1 to 10, **characterised in that**, after the application of the third layer, the layer system is sintered for at least 6 hours at a temperature of between 1100°C and 1500°C.

## Revendications

1. Procédé pour la fabrication d'un système de couches étanches au gaz conduisant les protons formé au moins par une couche de protection et une couche fonctionnelle sur un substrat poreux à capacité de conduction électronique, la couche de protection et la couche fonctionnelle présentant différentes compositions chimiques, et étant cependant respectivement étanches aux gaz et conduisant les protons, avec les étapes suivantes :
- une première couche comprenant un oxyde d'un métal M1 est appliquée sur le substrat et est frittée, M1 étant du zirconium, du titane ou un métal de terre rare dopé ;
- sur cette couche frittée, une deuxième couche comprenant un oxyde d'un métal M2 est appliquée, lequel est sélectionné dans la même classe que le métal M1, mais est différent de M1, et le système de couches est ensuite fritté ;
- sur les couches d'oxyde frittées, une troisième couche, comprenant un carbonate, de l'oxyde ou hydroxyde d'un ou plusieurs métaux alcalino-terreux Me est appliquée en une quantité telle, que
a) pendant un frittage final, la deuxième couche est entièrement convertie en une perovskite avec la formule Me(M2)O₃ et
b) la première couche est au moins partiellement convertie en une perovskite avec la formule Me(M1)O₃ et est ainsi réalisée de manière à conduire les protons.

2. Procédé selon la revendication 1, **caractérisé en ce que** les couches sont appliquées à l'aide d'une coulée en barbotine sous vide, d'une sérigraphie ou d'une pulvérisation de poudre humide.

3. Procédé selon l'une des revendications 1 à 2, **caractérisé en ce que** la quantité de composé de métal alcalino-terreux appliquée en tant que troisième couche est sélectionnée stoechiométriquement ou en excès, de sorte que la première couche est également entièrement convertie en une perovskite conduisant les protons.

4. Procédé selon l'une des revendications 1 à 3, **caractérisé en ce que** l'on sélectionne un oxyde de zirconium stabilisé à l'yttrium pour la première couche.

5. Procédé selon l'une des revendications 1 à 4, **caractérisé en ce que** la première couche est frittée à une température comprise entre 1300 °C et 1500 °C.

6. Procédé selon l'une des revendications 1 à 5, **caractérisé en ce que** l'on sélectionne du Cer en tant que métal M2 pour la deuxième couche.

7. Procédé selon l'une des revendications 1 à 6, **caractérisé en ce que**, après l'application de la deuxième couche, le système de couches est fritté pendant au moins 2 heures à une température comprise entre 1100 °C et 1400 °C.

8. Procédé selon l'une des revendications 1 à 7, **caractérisé en ce que**, pour les première et deuxième couches, des épaisseurs de couche sont sélectionnées de manière à ce que, lors du frittage final, on obtient une couche fonctionnelle d'une épaisseur comprise entre 5 et 100 µm et/ou une couche de protection d'une épaisseur comprise entre 0,5 et 10 µm.

9. Procédé selon l'une des revendications 1 à 8, **caractérisé en ce que** la première et/ou la deuxième couche sont dopées avec de l'yttrium, de l'ytterbium, de l'indium, du gadolinium, du scandium, de l'étain ou du niobium.

10. Procédé selon l'une des revendications 1 à 9, **caractérisé en ce que** l'on sélectionne du baryum, du strontium ou du calcium en tant que métal alcalino-terreux Me.

11. Procédé selon l'une des revendications 1 à 10, **caractérisé en ce que**, après l'application de la troisième couche, le système de couches est fritté pendant au moins 6 heures à une température comprise entre 1100 °C et 1500 °C.
